# EUROPÄISCHE PATENTSCHRIFT

(11) **EP 2 855 042 B1**
(45) Veröffentlichungstag und Bekanntmachung des Hinweises auf die Patenterteilung: **11.05.2016**
(21) Anmeldenummer: 13737788.3
(22) Anmeldetag: 28.05.2013
(51) Int. Cl.: B21D 39/20, B21D 41/02, B23P 9/02

(54) **UMFORMWERKZEUG UND VERFAHREN ZUM AUFWEITEN EINER ÖFFNUNG MIT EINER AUFWEITVORRICHTUNG**
FORMING TOOL AND METHOD FOR ENLARGING AN OPENING BY MEANS OF AN ENLARGING DEVICE
OUTIL ET PROCÉDÉ DE FAÇONNAGE POUR ÉLARGIR UNE OUVERTURE AU MOYEN D'UN DISPOSITIF D'ÉLARGISSEMENT

(30) Priorität: 01.06.2012 DE 102012010793
(43) Veröffentlichungstag der Anmeldung: 08.04.2015
(73) Patentinhaber: Airbus Defence and Space GmbH, 82024 Taufkirchen (DE)
(72) Erfinder: REESE, Eggert, 85667 Oberpframmern (DE)
(74) Vertreter: Kastel, Stefan
(86) Internationale Anmeldenummer: PCT/DE2013/000287
(87) Internationale Veröffentlichungsnummer: WO 2013/178211

(56) Entgegenhaltungen:
- EP-A1- 1 611 976
- WO-A1-2007/121932
- WO-A1-2013/113509
- US-A1- 2005 235 729

## Beschreibung

Die Erfindung betrifft ein Umformwerkzeug zum Aufweiten einer Öffnung mit einer Aufweitvorrichtung gemäss dem Oberbegriff des Anspruchs 1. Ferner betrifft die Erfindung ein Verfahren zum Aufweiten einer Öffnung gemäss dem Oberbegriff des Anspruchs 11.

Insbesondere in der Luftfahrt ist es wünschenswert, hochbelastete Montagebohrungen in metallischen Bauteilen über ein Umformverfahren aufzuweiten. Dies erfolgt zumeist im Wege der Kaltumformung. Infolge der plastischen Verformung des Materials im Bereich der Bohrung entstehen Eigenspannungen, die zu einer Verbesserung der Ermüdungsfestigkeit beitragen. Die Ausbreitung des Dehnfeldes ist hierbei abhängig von der aufgebrachten Dehnung und entspricht beispielsweise bei einer Aufweitung von ca. 3 % des Ausgangsdurchmessers ungefähr dem Zweifachen des Ausgangsdurchmessers.

Aus dem Stand der Technik sind eine Vielzahl an Umformverfahren, die auch als Aufdornverfahren bezeichnet werden, bekannt. All diese aus dem Stand der Technik bekannten Verfahren haben eine Änderung des Durchmessers zum Gegenstand.

So ist aus der US 2,672,175 ein Umformwerkzeug offenbart, das zum Aufweiten von dünnwandigen Rohren, wie beispielsweise KFZ-Schalldämpferrohren, verwendet wird. Das Werkzeug umfasst einen konischen Vierkantblock, gegen den vier einzelne Elemente über das Prinzip der schiefen Ebene gleiten und dabei zu einer Durchmesseränderung führen. Nachteilig hierbei ist, dass das Wertzeug nur für dünnwandige Bauteile geeignet ist und die Umformkräfte nur ungleichmäßig übertragen werden. Infolgedessen besteht die Gefahr von Bauteilschäden. Des Weiteren kann der Aufweitgrad nicht genau kontrolliert werden und größere Kräfte können nicht übertragen werden.

Aus der US 3,077,916 geht ein Umformwerkzeug hervor, das zum Aufweiten von dünnwandigen Rohren verwendet wird. Das Werkzeug weist eine Hülse aus mehreren Hülsenelementen auf, die in Radialrichtung verschiebbar sind. Durch ein Innenloch der Hülse ist eine Schraube geführt, wobei jeweils endseitig ein konischer Dorn angeordnet ist, der in das Innenloch hineinragt. Durch Drehung der Schraube wird einer der beiden Dorne auf den anderen Dorn zu bewegt, wobei sich die Hülsenelemente in Radialrichtung bewegen. Hierdurch erfolgt eine Aufweitung der dünnwandigen Rohre. Ein ähnliches Werkzeug geht auch aus der US 3,986,383 hervor. Beide Umformwerkzeuge haben jedoch den Nachteil, dass sie lediglich für dünnwandige Bauteile geeignet sind und größere Kräfte nicht übertragen werden können. Zudem werden die Expansionskräfte nur ungleichmäßig übertragen, so dass es immer wieder zu Bauteilschäden kommen kann. Ferner ist es nicht möglich, den Aufweitgrad genau zu steuern, so dass es oft schwierig ist, das Werkzeug wieder zu lösen, wenn zu große Kräfte aufgebracht werden.

In der US 5,138,863 ist ein Umformwerkzeug zum Aufweiten von dünnwandigen Rohren für die Herstellung von Rohrverbindungen offenbart. Das Umformwerkzeug weist einen in Axialrichtung bewegbaren Dorn auf, der in eine Hülse, die mehrere Hülsenelemente aufweist, einführbar ist, wobei die radiale Verschiebung der Hülsenelemente von der Einführtiefe des Dorns abhängt. Nachteilig hierbei ist, dass das Umformwerkzeug nicht zum Aufdornen dickwandiger Strukturen geeignet ist.

In der EP 1 611 976 A1 ist eine Methode sowie eine Vorrichtung zum Abbau von Eigenspannungen offenbart.

Aus der DE 26 54 102 C2 ist ein Umformwerkzeug bekannt, das zum Rohraufweiten verwendet wird. Das Umformwerkzeug weist einen Dorn und eine Hülse auf, die aus mehreren in Radialrichtung bewegbaren Hülsenelementen gebildet ist. Der Dorn ist in Axialrichtung verschiebbar gelagert und in die Hülse einführbar, wobei je nach Einführtiefe des Dorns eine entsprechende radiale Verschiebung der Hülsenelemente erfolgt. Das Umformwerkzeug hat jedoch den Nachteil, dass es nicht zum Aufweiten von Bohrungen dickwandiger Strukturen, beispielsweise dicken Platten, anwendbar ist.

All die aus dem Stand der Technik bekannten Werkzeuge zum Aufweiten von Rohren sind nicht geeignet, hohe Umformkräfte von beispielsweise 50 kN zu übertragen. Dies ist insbesondere bei hochfesten metallischen Bauteilen mit großer Wandstärke, wie sie in der Luft- und Raumfahrt verwendet werden, nötig, um Eigenspannungen mittels plastischer Verformung im Umfeld der Bohrung einzubringen. Hierbei handelt es sich beispielsweise um Wand-, Platten-, oder Stapeldicken t, die ein Mehrfaches des aufzuweitenden Lochdurchmessers d betragen, das heißt t = 0,5 bis 5*d. Im Vergleich hierzu entspricht die Wanddicke der dünnwandigen Rohre lediglich einem Bruchteil des aufzuweitenden Durchmessers, nämlich beispielsweise t = 0,05 bis 0,3*d.

Es ist bekannt, für dickwandige Bauteile konventionelle Umformverfahren wie das Split-Sleeve-, wie es bspw. in der US 5,305,627 offenbart ist, oder das Split-Mandrel-Verfahren, wie es bspw. in der US 4,423,619 offenbart ist, einzusetzen. Das Umformwerkzeug weist eine Hülse und einen Dorn auf, wobei der Dorn lokal einen Durchmesser hat, der größer ist als der Bohrungsdurchmesser. Hierbei wird der Dorn durch die Bohrung gezogen und der Durchmesser der Bohrung wird über die Bauteildicke kontinuierlich vergrößert. Beide Aufdornverfahren haben jedoch den Nachteil, dass das erzeugte Eigenspannungsfeld inhomogen ist und schon geringe Abweichungen von den Fertigungsmaßen der Bohrungen und/oder des Werkzeugs zu starken Schwankungen im Aufweitgrad führen. Beispielsweise kann eine Bohrung mit einem Durchmesser von 6 mm, die nominell um 4 % aufgeweitet wurde, im Ergebnis einen tatsächlichen Aufweitgrad zwischen 2,5 % und 4,9 % aufweisen. Ferner haben die Verfahren auch den Nachteil einer inhomogenen Spannungs- und Dehnungsverteilung. Zudem lassen sich Hochleistungswerkstoffe mit stark richtungsabhängigen Eigenschaften, wie die in der Luftfahrt beispielsweise vielfach eingesetzten Aluminiumlegierungen, mit diesen Verfahren nur in sehr geringem Maße, das heißt deutlich unter 3 %, aufweiten. Hierdurch wird eine Verbesserung der Ermüdungsfestigkeit kaum erreicht. Ferner führen die Art der Materialverformung und der daraus resultierende Spannungszustand im Werkstoff, unter dem sich die gewünschten Eigenspannungen ausbilden sollen, zu einer frühzeitigen Rissbildung. Des Weiteren macht die Verwendung von Hülsen, wie dies im Split-Sleeve-Verfahren praktiziert wird, das Verfahren teuer und unwirtschaftlich. Zudem treten immer wieder Probleme durch vorzeitiges Werkzeugversagen, insbesondere Kaltverschweißungen zwischen dem Dorn und dem Bauteil im Split-Mandrel-Verfahren auf.

Aus der gattungsbildenden WO 2007/121932 A1 geht ein Umformwerkzeug hervor, mit dem eine Bohrung über die gesamte Wandstärke, das heißt Platten- bzw. Stapeldicke kontinuierlich aufgeweitet werden kann. Das Umformwerkzeug gewährleistet aufgrund seiner Krafteinleitung im Vergleich zu den konventionellen Aufdornverfahren einen günstigen mehrachsigen Spannungszustand. Hierdurch werden ein homogenes Dehnfeld und eine deutlich verbesserte Ermüdungsfestigkeit erreicht. Besonders vorteilhaft ist das Verfahren für Werkstoffe mit ausgeprägter Orthotropie, beispielsweise Aluminiumlegierungen, in denen Bohrungen rissfrei aufgeweitet werden können. Die Bohrungen können hierbei um bis zu 5 % ihres Ursprungsdurchmessers aufgeweitet werden.

Der Erfindung liegt die **Aufgabe** zugrunde, ein Umformwerkzeug und ein Umformverfahren bereitzustellen, mit denen die Ermüdungsfestigkeit von Öffnungen in Bauteilen beispielsweise Montagebohrungen erhöht wird, sowie Öffnungen in dickwandigeren Bauteilen sicherer aufgeweitet werden können und/oder eine Rissbildung vermieden wird.

Diese Aufgabe wird durch ein Umformwerkzeug mit den Merkmalen des beigefügten Anspruchs 1 sowie einem Verfahren gemäß dem Anspruch 11 **gelöst.**

Vorteilhafte Ausgestaltungen sind Gegenstand der Unteransprüche. Außerdem wird ein vorteilhaftes Aufweitelement für das Werkzeug bzw. das Verfahren angegeben, das aber nicht Gegenstand der vorliegenden Erfindung ist.

Die Erfindung schafft gemäß eines Aspekts davon ein Umformwerkzeug zum Aufweiten einer Öffnung mit einer Aufweitvorrichtung, die mehrere Aufweitelemente umfasst, wobei die Aufweitelemente jeweils eine gekrümmte Formfläche aufweisen, die zwischen zwei umfangsseitigen Endkanten verläuft, wobei die Aufweitelemente von der ersten Position in eine zweite Position überführbar sind, wobei in der ersten Position, die einem zusammengezogenen Zustand entspricht, die Aufweitelemente über Trennflächen miteinander in Verbindung stehen und wobei in einer zweiten Position, die einem aufgeweiteten Zustand entspricht, die Aufweitelemente derart von einem Zentrum der Aufweitvorrichtung in Radialrichtung verschoben sind, dass die Trennflächen voneinander beabstandet sind, wobei in der ersten Position die umfangsseitigen Endkanten weiter von dem Zentrum beabstandet sind als ein mittlerer Bereich der Formflächen.

Vorteilhaft können z.B. gezielt Eigenspannungen im Bereich von Öffnungen erzeugt werden, ohne jedoch das Bauteil dabei zu beschädigen.

Mit einem Umformwerkzeug gemäß einer vorteilhaften Ausgestaltung können im Umfeld einer Montagebohrung Druckeigenspannungen, insbesondere in dickwandigen metallischen Bauteilen, wie beispielsweise hochfesten Aluminiumlegierungen, fehlerfrei eingebracht werden, d.h. ohne Risse, so dass die Ermüdungsfestigkeit der Bohrung und schließlich des Bauteils deutlich verbessert wird.

Im Vergleich zu bisherigen Umformwerkzeugen wird z.B. eine Verbesserung um 10% bis zu 15% erzielt. Hierbei beträgt die Aufweitung des Bohrungsdurchmessers beispielsweise 3% bis 5% des Bohrungsausgangsdurchmessers.

Ferner ermöglicht eine vorteilhafte Ausgestaltung des Umformwerkzeugs eine gleichförmige Krafteinleitung in das Bauteil, so dass ein deutlich verbessertes Fließverhalten des Materials erreicht wird. Insbesondere werden über die Bauteildicke gleichmäßig Eigenspannungen eingebracht, so dass die eingebrachten Eigenspannung über die Bauteildicke nicht variieren, sondern homogen sind.

Vorzugsweise tritt bei einem Umformwerkzeug gemäß einer Ausgestaltung der Erfindung keine Reibung an der Innenwandung der Öffnung auf.

Vorzugsweise ist die radiale Verschiebung der Aufweitelemente steuerbar, so dass der ablaufende Verformungsvorgang kontrollierbar ist, so dass ein homogenes Dehnungsfeld erzielt wird, welches für eine effektive Steigerung der Ermüdungsfestigkeit vorteilhaft ist. Somit können auch Hochleistungswerkstoffe im Bereich einer Öffnung rissfrei aufgeweitet werden.

Vorzugsweise kann das Umformwerkzeug zum Aufweiten von Öffnungen unterschiedlichen Durchmessers verwendet werden.

Vorzugsweise erleichtert ein Umformwerkzeug gemäß einer Ausgestaltung der Erfindung eine Inspektion der aufgeweiteten Öffnung, da sich Risse, sofern sie dennoch auftreten, vom Zentrum aus nach beiden Seiten reichen, so dass Risse von beiden Seiten der Öffnung erkennbar sind.

Bevorzugt eignet sich das Umformwerkzeug zum Test neuer Werkstoffe hinsichtlich ihrer Verhalten während einer Kaltumformung. Somit kann die Anzahl derartiger Tests reduziert und damit einhergehend Testkosten eingespart werden.

Vorteilhaft gleicht ein Umformwerkzeug gemäß einer Ausgestaltung der Erfindung Maßänderungen infolge seiner Abnutzung aus, so dass es länger verwendbar ist.

Bevorzugt tritt bei einer vorteilhaften Ausgestaltung des Umformwerkzeuges während des Aufweitens einer Öffnung keine Normalkraft auf, die auf die Werkstückoberfläche wirkt, so dass kein das Werkstück schädigendes Biegemoment entsteht.

Vorteilhaft erfolgt bei einem Umformwerkzeug gemäß der vorliegenden Erfindung während des Aufweitens keine Kaltverschweißung der Hülse mit dem Werkstück. Somit ist eine Schädigung des Bauteils durch eine Kaltverschweißung nicht möglich. Zudem kann die Hülse wieder verwendet werden.

Vorzugsweise treten bei einem Umformwerkzeug gemäß einer Ausgestaltung der Erfindung im Randbereich einer aufgeweiteten Öffnung nur zu vernächlässigende Wulste auf. Somit werden die Fertigungskosten reduziert, da ein weiterer kostenintensiver Schritt zum Entfernen des Wulstes entfällt und sich der Aufweitprozess vorteilhafter in den Fertigungsprozess integrieren lässt.

Bevorzugt ist eine Hülse bei einer vorteilhaften Ausgestaltung eines Umformwerkzeugs wieder verwendbar, so dass die Fertigungskosten reduziert werden. Somit ist es nicht mehr nötig jedes Mal zum Aufweiten einer Öffnung eine neue Hülse zu verwenden.

Vorteilhafterweise entfällt ein aufwendiges und kostenintensives Entfernen einer Hülse bei einem Umformwerkzeug gemäß einer vorteilhaften Ausgestaltung.

Vorteilhaft entfällt bei einem Umformwerkzeug gemäß einer Ausgestaltung der Erfindung die Verwendung einer teuren Spannbuchse zum Aufweiten einer Öffnung.

Weiterhin bevorzugt kann ein Umformwerkzeug gemäß der vorliegenden Erfindung zum Aufweiten von Öffnungen in Reparaturteilen verwendet werden, wobei je nach Öffnungsdurchmesser und der gewünschten Aufweitung der Öffnung das Umformverhalten des Reparaturteils sowie die Eigenspannungsverteilung im Bereich der Öffnung und die daraus resultierende Ermüdungsfestigkeit vorteilhaft im Vorfeld mittels einer FEM-Simulation ermittelt werden kann.

Um eine gleichförmige Krafteinleitung in das Bauteil zu begünstigen und dadurch ein besseres Fließverfahren zu ermöglichen, ist weiter bevorzugt vorgesehen, dass in der zweiten Position die umfangsseitigen Endkanten und die Formflächen gleichweit von dem Zentrum beabstandet sind.

Weiterhin bevorzugt ist die Formfläche der Aufweitelemente im Querschnitt in Radialrichtung gesehen kreisbogenförmig.

Vorzugsweise liegen in der ersten Position die Endkanten auf einem umbeschriebenen Kreis und ein mittlerer Bereich der Formflächen ist von dem Kreis beabstandet, und in der zweiten Position liegen sowohl die Endkanten als auch die Formflächen auf einem umbeschriebenen Kreis.

Die Aufweitelemente können z.B. identisch sein, wobei in der ersten Position, die einem zusammengezogenen Zustand entspricht, eine Außenkontur eines Querschnitts durch die Aufweitvorrichtung in Radialrichtung gesehen näherungsweise einem vierblättrigen Kleeblatt entsprechen kann.

Zum Beispiel kann ein Durchmesser im Bereich der Endkanten der Aufweitelemente dem Ausgangsdurchmesser der aufzuweitenden Bohrung ähneln.

In der zweiten Position, die einem aufgeweiteten Zustand entspricht, kann ein zylindrischer Außenradius der Aufweitelemente dem Radius der Öffnung im aufgeweiteten Zustand, d.h. dem Enddurchmesser der aufgeweiteten Öffnung, entsprechen.

Somit kann vorteilhaft eine optimale Eigenspannungsverteilung im Umfeld der Montagebohrung erreicht werden.

In einer weiteren vorteilhaften Ausgestaltung ist ein Radius der Formflächen größer als sein Abstand der Endkanten von dem Zentrum der Aufweitvorrichtung in der ersten Position, wobei der Radius der Formflächen vorzugsweise zwischen 2,5% und 10% größer ist und insbesondere ca. 5% größer ist.

Infolgedessen entwickelt sich während des Aufdornprozesses eine deutlich homogenere Eigenspannungszone, die sich wiederum vorteilhaft auf die Ermüdungsfestigkeit auswirkt.

Ferner ist bevorzugt ein Antriebselement vorgesehen, mittels dem die Aufweitvorrichtung von der ersten Position in eine zweite Position überführbar ist.

Vorzugsweise weist das Antriebselement einen Dorn auf, der in ein Innenloch der Aufweitvorrichtung einführbar ist.

Zum Beispiel ist der Dorn als konischer Vierkantdorn ausgebildet und aus einem hochfesten metallischen oder keramischen Werkstoff hergestellt, der eine hohe Druck- und Biegefestigkeit sowie Härte aufweist.

Beispielsweise kann für den Dorn ein Hartmetall mit einer Festigkeit von mehr als 4000 MPa und eine Härte von mehr als 60 HRC verwendet werden.

Das Innenloch der Hülse weist vorzugsweise eine Geometrie auf, die analog zu der Geometrie des Dorns ausgeführt ist.

Zudem kann der Dorn konisch ausgebildet sein, wobei das Innenloch bzw. eine Innenseite der Aufweitelemente analog zum Dorn ebenfalls konisch ausgeführt sind.

Die Hülse kann aus einem hochfesten metallischen Werkstoff mit hoher Duktilität hergestellt sein, wobei die Hülse aus einer Nickel-Kobalt-Basis-Legierung mit einer Zugfestigkeit von mehr als 2000 MPa ausgeführt sein kann.

Bevorzugt sind die Innenflächen des Innenlochs und/oder die Außenflächen des Dorns mit einer Beschichtung versehen. Die Beschichtung vermindert den Reibkoeffizienten, so dass ein verbessertes Gleiten vorliegt. Des Weiteren schützt die Beschichtung gegen Abrieb oder Verschleiß und in feuchter Umgebung auch gegen Korrosion. Schmierende Eigenschaften der Beschichtung können durch eingelagerte Graphitpartikel bereitgestellt werden. Die Innenfläche des Innenlochs und die Außenfläche des Dorns können als Funktionsflächen von Dorn und der Aufweitelemente bezeichnet werden. Hierbei können die Funktionsflächen mit einer zum Beispiel extrem harten Schicht zur Verbesserung der Gleiteigenschaften, zum Schutz vor Korrosion und vorzeitigem Verschleiß beschichtet werden.

Vorzugsweise kann die Beschichtung aus einer elektrochemisch aufgetragenen Nickelschicht und/oder einer diamantähnlichen Kohlenstoffschicht, insbesondere in einer Dicke von wenigen Nanometern bis mehrere Mikrometer" gebildet sein.

Die elektrochemisch aufgetragene Nickelschicht kann 10 µm betragen oder die diamantähnliche Kohlenstoffschicht kann eine Härte von bis zu 6000 kg/mm² haben.

In einer weiteren vorteilhaften Ausgestaltung beträgt ein Winkel zwischen einer Mittelachse des Dorns und einer Außenfläche zwischen 0,3 Grad und 3 Grad. Durch den Winkel zwischen der Mittelachse und den Außenflächen bzw. Funktionsflächen des Dorns ergibt sich dessen Konizität. Mit Hilfe des Winkels wird die axiale Kraft in die für die Aufweitung benötigte Radialkraft umgelenkt. Hierbei steuert der Winkel maßgeblich das Verhältnis von axialer zu radialer Kraft, die Reibverluste und den möglichen Verschleiß am Werkzeug.

Zum Beispiel kann bei einem Winkel von 0,3 Grad für eine Bohrung mit einem Durchmesser von 6 mm in einer 2000er-Legierung bei einem Verhältnis von Werkstückdicke t zu Bohrungsdurchmesser d von t/d=5 die Kraft 20 kN betragen. Im Vergleich hierzu beträgt die Radialkraft 38 kN bei einem Winkel von 3 Grad und ansonsten gleichem Verhältnis von t/d=5.

Ein Aufweitelement zur Verwendung in einem derartigen Umformwerkzeug ist ebenfalls beschrieben. Bevorzugt weist das Aufweitelement eine näherungsweise trapezförmige Querschnittsform auf, wobei wenigstens eine zwischen den beiden Schenkeln verlaufende Seite gekrümmt ist. Weiter bevorzugt weist die gekrümmt verlaufende Seite einen Radius auf, der dem der Öffnung im aufgeweiteten Zustand entspricht. Gemäß einem weiteren Aspekt schafft die Erfindung ein Verfahren zum Aufweiten einer Öffnung von einem ersten Durchmesser d1 zu einem zweiten Durchmesser d2, das folgende Schritte umfasst:
a) Bereitstellen mehrerer Aufweitelemente, die jeweils eine zwischen zwei Endkanten verlaufende Formfläche und zwei Trennflächen aufweisen, wobei die Aufweitelemente in einer ersten Position, die einem Durchmesser d 1 im unaufgeweiteten Zustand entspricht, in eine zweite Position, die einem Durchmesser d2 im gewünschten aufgeweiteten Zustand entspricht, überführbar sind, indem die Aufweitelemente in einer Radialrichtung verschoben werden, dadurch gekennzeichnet, dass die Trennflächen und die Formflächen derart ausgestaltet sind, dass in der ersten Position ein mittlerer Bereich der Formflächen bei Anlage an der unaufgeweiteten Öffnung weiter von der Innenwand der Öffnung beabstandet ist als die Endkanten, und dass in der zweiten Position die Formflächen insgesamt der Kontur der Innenwandung der erwünschten aufgeweiteten Öffnung entsprechen;
b) Zusammenfügen der Aufweitelemente zu einer Aufweitvorrichtung und Überführen der Aufweitelemente in ihre erste Position;
c) Einführen der Aufweitvorrichtung in die Öffnung und
d) kontinuierliches Aufweiten der Öffnung durch Überführen der Aufweitelemente in die zweite Position.

Bei einer kontinuierlichen Aufweitung der Öffnung wird eine gleichförmige Krafteinleitung in das Bauteil ermöglicht, so dass ein deutlich verbessertes Fließverhalten des Materials erreicht wird. Vorteilhaft wird ein homogenes Dehnungsfeld erzielt, so dass dickwandige metallische Bauteile, beispielsweise aus hochfesten Aluminiumlegierungen, ohne Rissbildung aufgeweitet werden können. Dadurch wird die Ermüdungsfestigkeit der Öffnung gesteigert.

Bevorzugt kann das Verfahren zum Aufweiten der Öffnung von einer Seite aus verwendet werden, so dass bei zwei benachbarten Werkstücken lediglich eine der beiden Öffnungen aufgeweitet wird. Dadurch kann die Aufweitvorrichtung auch zum Aufweiten einer Öffnung einer Metall- und Nicht-Metall-Verbindung, wie beispielsweise eine Hybrid-Verbindung mit Faserverbundwerkstoffen, eingesetzt werden, bei denen nur die metallische Komponente aufgeweitet werden soll. Hierbei kann der metallische Anteil aufgeweitet werden, ohne dass das Nicht-MetallTeil berührt und/oder beschädigt wird. Hierdurch wird ein als One-Step-Assembly benannter Verfahrensschritt möglich, da die Teile nach dem Bohren für die Aufdornung der metallischen Komponente nicht noch einmal getrennt werden müssen, sondern in der bereits fixierten Position verbleiben können. Somit wird eine Zeitersparnis ermöglicht.

Weiterhin bevorzugt wird das Verfahren zum Aufhalten einer Öffnung mit einem Durchmesser d in Werkstücken mit einer Platten- oder Stapeldicke t verwendet, wobei t>d ist, insbesondere t>2*d.

Ausführungsbeispiele der Erfindung werden nachfolgend anhand der beigefügten Zeichnungen näher erläutert. Hierin zeigen:
- Fig. 1: eine perspektivische Ansicht eines Ausführungsbeispiels eines Umformwerkzeugs;
- Fig. 2: eine perspektivische Ansicht eines Doms;
- Fig. 3: eine perspektivische Ansicht eines Aufweitelementes;
- Fig. 4: eine perspektivische Ansicht des Umformwerkzeugs, das in eine aufzuweitende Öffnung eines Werkstücks eingesetzt ist;
- Fig. 5: einen Längsschnitt durch das Umformwerkzeug und das Werkstück während eines Umformvorganges;
- Fig. 6: einen Ausschnitt eines radialen Querschnitts durch ein in eine Öffnung eingesetzten Umformwerkzeuges vor dem Aufweiten der Öffnung;
- Fig. 7: eine schematische Darstellung der geometrischen Verhältnisse von Umformwerkzeug zu Öffnung vor dem Aufweiten der Öffnung;
- Fig. 8: eine schematische Darstellung der Eigenspannungsverteilung im Werkstück nach dem Aufweiten der Öffnung mit einem konventionellen Umformwerkzeug;
- Fig. 9: eine schematische Darstellung der Eigenspannungsverteilung im Werkstück nach dem Aufweiten der Öffnung mit einem Umformwerkzeug gemäß einer Ausführungsform der Erfindung;
- Fig. 10: einen Längsschnitt durch das erfindungsgemäße Umformwerkzeug und einer Hybrid-Verbindung während eines Umformvorganges; und
- Fig. 11: ein Schaubild, das die Lebensdauer eines Werkstücks bei unterschiedlichen Lastzuständen zeigt, wobei Öffnungen nicht oder mit unterschiedlichen Aufweitverfahren aufgeweitet worden sind.

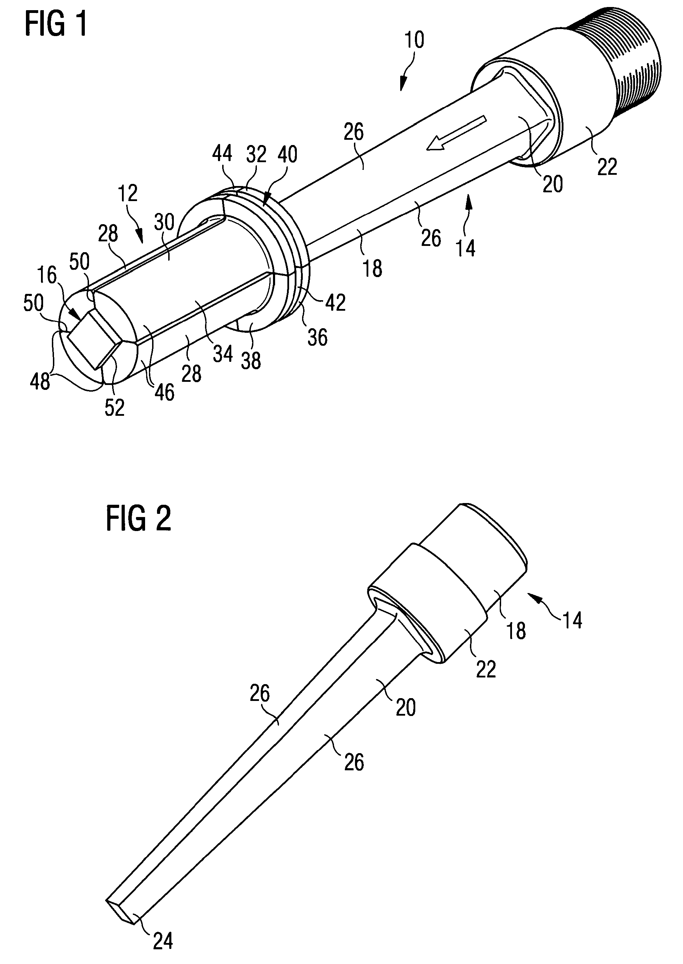

In Fig. 1 ist ein Ausführungsbeispiel eines Umformwerkzeugs 10 dargestellt. Das Umformwerkzeug 10 weist eine Aufweitvorrichtung 12 und ein Antriebselement 14 auf, das in ein Innenloch 16 der Aufweitvorrichtung 12 einführbar ist.

Wie in den Fig. 1 und 2 gezeigt ist, ist das Antriebselement 14 als ein Dorn 18 ausgebildet, der einen ersten Abschnitt 20 und einen zweiten Abschnitt 22 umfasst. Der erste Abschnitt 20 weist einen in Radialrichtung R gesehen polygonalen Querschnitt auf. Der erste Abschnitt 20 ist in Axialrichtung A hin zu einem ersten Ende 24 des Dorns 18 konisch ausgebildet.

Der Dorn 18 ist im vorliegenden Ausführungsbeispiel als Vierkantdorn ausgebildet, wobei auch andere polygonale Ausgestaltungen denkbar sind. Die Außenflächen des Dorns 18 sind als Funktionsflächen 26 ausgebildet, wobei ein Winkel α zwischen der Mittelachse M und den Funktionsflächen 26 die Konizität des Dorns 18 ergibt.

Idealerweise beträgt der Winkel α zwischen 0,3 Grad und 3 Grad. Über diesen Winkel α wird die axiale Kraft Fₐ in die für die Aufdornung benötigte Radialkraft Fᵣ umgelenkt. Somit steuert der Winkel α maßgeblich das Verhältnis von axialer zu radialer Kraft.

Der Dorn 18 ist aus einem hochfesten metallischen oder keramischen Werkstoff mit einer hohen Druck- und Biegefestigkeit sowie Härte, wie beispielsweise einem Hartmetall mit einer Festigkeit von mehr als 4000 MPa und einer Härte von mehr als 60 HRC gefertigt.

Die Funktionsflächen 26 des Dorns 18 können mit einer extrem harten Schicht zur Verbesserung der Gleiteigenschaften, zum Schutz vor Korrosion und vorzeitigem Verschleiß beschichtet werden, wie beispielsweise mit einer elektrochemisch aufgetragenen Nickelschicht von mehreren Mikrometer Dicke oder einer diamantähnlichen Kohlenstoffschicht mit einer extremen Härte von beispielsweise bis zu 6000 kg/mm².

Der zweite Abschnitt 22 ist als Haltabschnitt ausgebildet mittels dem der Dorn 18 in einem Werkzeug bzw. einer Aufnahmevorrichtung derart aufgenommen werden kann, dass der Dorn 18 in Axialrichtung bewegbar und in das Innenloch 16 der Aufweitvorrichtung 12 einführbar ist.

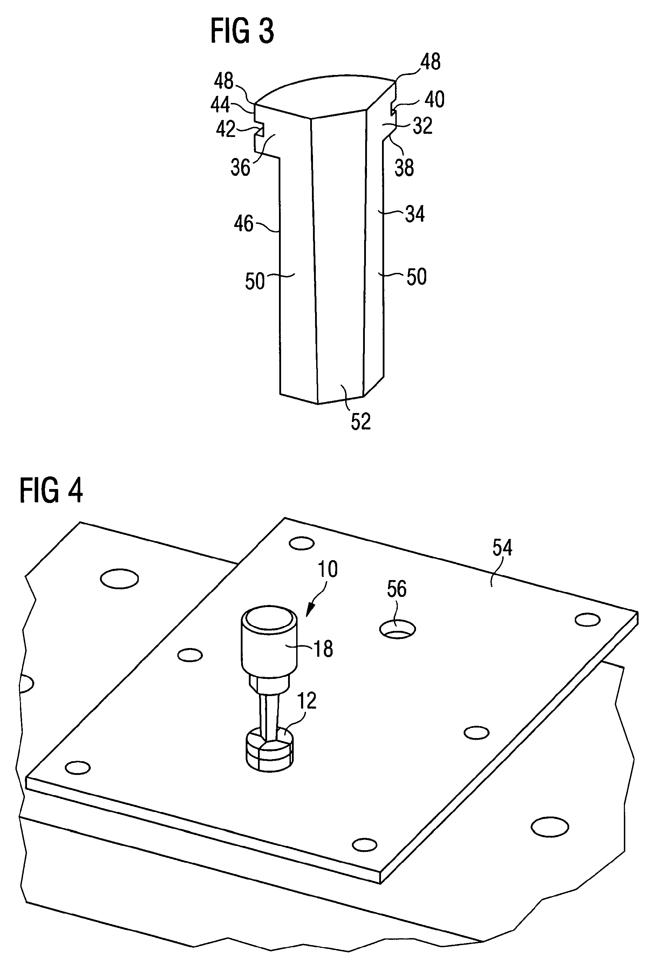

Gemäß den Fig. 1 und 3 umfasst die Aufweitvorrichtung 12 mehrere, z.B. vier, Aufweitelemente 28, die im zusammengesetzten Zustand eine Hülse 30 bilden.

Die Aufweitelemente 28 weisen einen ersten Abschnitt 32 und einen zweiten Abschnitt 34 auf. Der erste Abschnitt 32 hat einen größeren Durchmesser als der zweite Abschnitt 32 und ist als Flansch 36 ausgebildet, wobei dieser eine Auflagefläche 38 zur Auflage an einem Werkstück 54 aufweist. Zusätzlich ist an dem zweiten Abschnitt 34 eine Aufnahmevorrichtung 40 in Form einer Ausnehmung eingebracht, die in Umfangsrichtung um eine Außenfläche 44 des ersten Abschnitts 32 verläuft.

Der zweite Abschnitt 34 weist eine gekrümmte Formfläche 46 auf, die im Querschnitt in Radialrichtung gesehen kreisbogenförmig ausgebildet ist. Die Formfläche wird zwischen zwei umfangsseitigen Endkanten 48 begrenzt. An die Endkanten 48 schließt sich jeweils eine Trennfläche 50 an, die als Anlagefläche für ein weiteres Aufweitelement 28 dient.

Ferner weist das Aufweitelement auf einer gegenüberliegenden Seite zu der Formfläche 46 eine Funktionsfläche 52 auf, die analog zur Funktionsfläche 26 des Dorns 18 ebenfalls konisch ausgeführt ist.

Wie in Fig. 1 ersichtlich ist, liegen im zusammengebauten Zustand der Aufweitvorrichtung 12 jeweils ein Aufweitelement 28 mittels seiner Trennfläche 50 an einer weiteren Trennfläche 50 eines weiteren Aufweitelements 28 an, so dass die Aufweitvorrichtung 12 näherungsweise eine Hülse 30 bildet.

Um die Aufweitelemente 28 im zusammengesetzten Zustand zu fixieren, kann ein (nicht dargestelltes) elastisches Mittel, beispielsweise in Form eines Gummirings, in die Ausnehmungen 42 eingebracht werden.

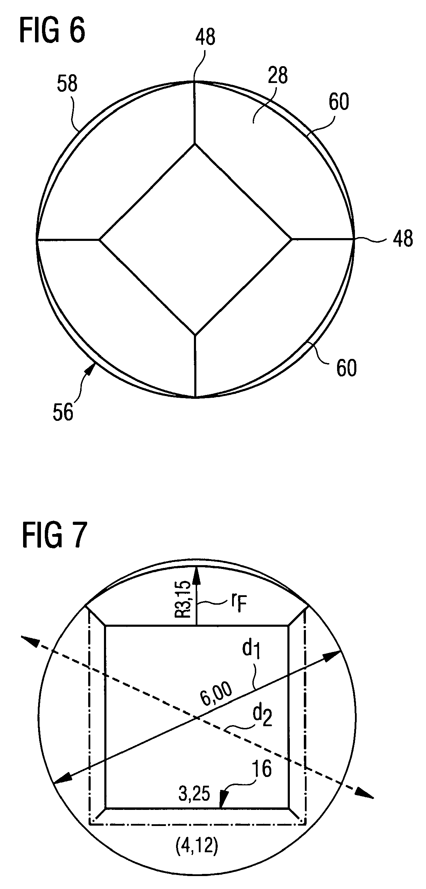

Wie insbesondere in Fig. 6 ersichtlich ist, liegen in einer Ausgangsposition lediglich die Endkanten 48 an einer Innenwandung 58 an, wobei ein mittlerer Bereich 60 der Formflächen 46 von der Innenwandung 58 der Öffnung 56 beabstandet ist. Um dies zu erreichen, sind in dem Ausführungsbeispiel die Trennflächen 50 derart ausgebildet, dass in der Ausgangsposition der Aufweitvorrichtung 12 lediglich die Endkanten 48 an der Innenwandung 58 der Öffnung 56 anliegen und der mittlere Bereich 60 der Formflächen 46 von der Innenwandung 58 beabstandet ist. Somit entspricht der maximale Durchmesser der Aufweitvorrichtung 12 in einer Ausgangsposition dem Durchmesser der Öffnung 56 im nicht-aufgeweitetem Zustand.

Die vorhergehend beschriebenen Ausführungen werden anhand eines in Fig. 7 dargestelllten Beispieles zur Ausgestaltung des Radius r_{F} der Formflächen 46 näher erläutert. Bei einer Öffnung 56, die im nicht-aufgeweiteten Zustand einen Durchmesser d₁ von 6 mm hat und deren Durchmesser d₂ auf 6,3 mm aufgeweitet werden soll, beträgt der Radius r_{F} der Formfläche 46 eine Länge von 3,15 mm. Das Innenloch 16 der Aufweitvorrichtung 12 hat einen polygonalen (quadratischen) Querschnitt mit einer Innenfläche von 3,25 mm Seitenlänge im nicht-aufgeweiteten Zustand und einer Innenfläche von 4,12 mm Seitenlänge im aufgeweiteten Zustand.

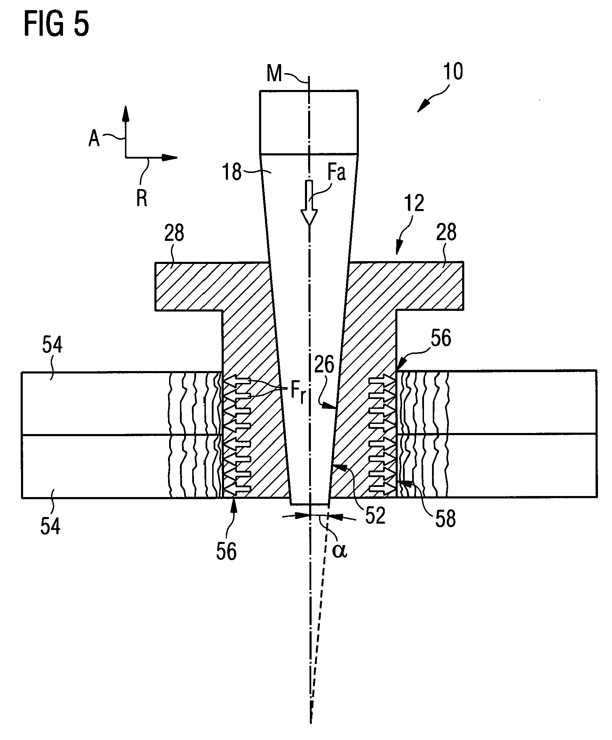

Im Folgenden wird ein mögliches Verfahren zum Aufweiten einer in einem Werkstück 54 eingebrachten Öffnung 56 anhand der Fig. 4 und 5 näher erläutert. Wie bereits zuvor beschrieben, werden die Aufweitelemente 28 zu einer Aufweitvorrichtung 12 zusammengesetzt und mittels eines elastischen Mittels fixiert. Anschließend wird die Aufweitvorrichtung 12 in die Öffnung 56 eingesetzt.

Zum Aufweiten der Öffnung 56 wird, wie in den Fig. 4 und 5 dargestellt ist, der Dorn 18, insbesondere der erste Abschnitt 20 des Dorns 18, in das Innenloch 16 der Aufweitvorrichtung 12 eingeführt. Da die jeweiligen Funktionsflächen 26, 52 komplementär zueinander ausgebildet sind, erfolgt bei einem Einführen des Dorns 18 in das Innenloch 16 hinein eine Bewegung der Aufweitelemente 28 in Radialrichtung R, wobei eine Verschiebung der Aufweitelemente 28 in Radialrichtung R von der Einführtiefe des Dorns 18 abhängt. Über den Winkel α zwischen der Funktionsfläche 26 und der Mittelachse M des Dorns 18 wird die axiale Kraft Fₐ in die für die Aufweitung benötigte Radialkraft Fᵣ umgelenkt. Somit steuert der Winkel α maßgeblich das Verhältnis von axialer zu radialer Kraft, die Reibverluste und den möglichen Verschleiß am Werkzeug.

Wie in Fig. 5 ersichtlich ist, wird durch eine axiale Verschiebung des Dorns 18 eine radiale Verschiebung der Aufweitelemente 28 erzeugt, wobei eine Radialkraft Fᵣ aufgebracht wird, die die Öffnung 56 des Werkstücks 54 aufweitet. Dadurch wird das Material in unmittelbarer Umgebung der Öffnung 56 plastisch verformt. Dies führt zur Ausbildung von Eigenspannungen im Werkstück, die bis zu einer zweifachen Entfernung des Öffnungsdurchmessers im Material auftreten können. Hierdurch wird die Ermüdungsfestigkeit der Öffnung 56 verbessert.

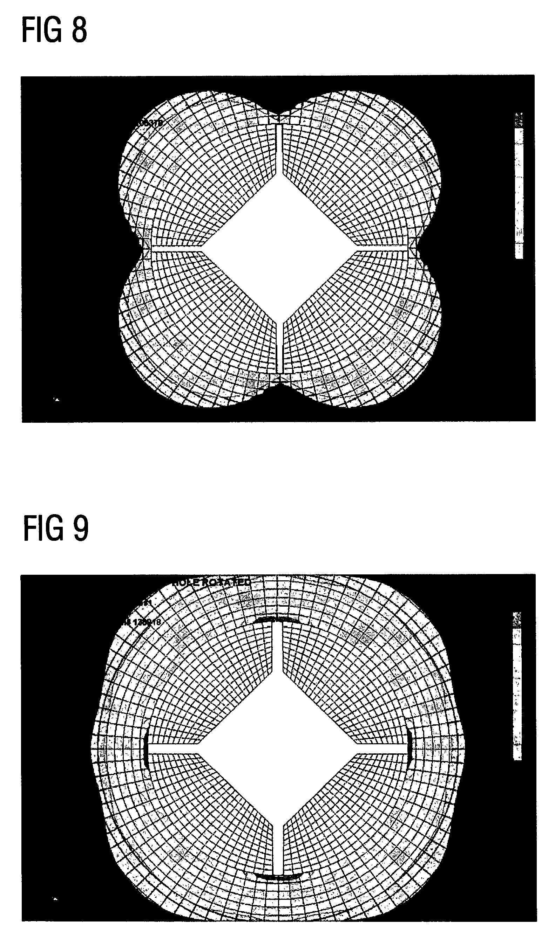

Die erfindungsgemäße Aufweitvorrichtung 12 begünstigt aufgrund ihrer optimierten Geometrie eine gleichförmige Krafteinleitung in das Bauteil und ermöglicht so ein deutlich verbessertes Fließverhalten des Materials. Wie in den Fig. 8 und 9 ersichtlich ist, führt dies zu einer deutlich homogeneren Eigenspannungsverteilung nach dem Aufweitprozess, die sich wiederum vorteilhaft auf die Ermüdungsfestigkeit auswirkt.

In Fig. 8 ist die Eigenspannungsverteilung nach einem Aufweitprozess mit einer aus dem Stand der Technik bekannten Aufweitvorrichtung dargestellt. Bei dieser Aufweitvorrichtung haben die Formflächen einen Radius, der dem der Öffnung im nicht-aufgeweiteten Zustand entspricht. Hierdurch wird wie in Fig. 8 ersichtlich ist, eine inhomogene Eigenspannungsverteilung erzielt, wobei die größte Spannung im mittleren Bereich der Formflächen auftreten. Im Bereich der Endkanten sind die in das Werkstück eingebrachten Eigenspannungen kaum merklich in das Werkstück eingedrungen. Im Vergleich hierzu wird bei der Aufweitvorrichtung 12 gemäß dem Ausführungsbeispiel der Erfindung eine homogenere Eigenspannungsverteilung erreicht. Wie in Fig. 9 gezeigt ist, wird eine gleichmäßige Verteilung der Eigenspannung bzw. eine gleich weite Entfernung der in das Werkstück eingebrachten Eigenspannungen in das Werkstück 54 erreicht.

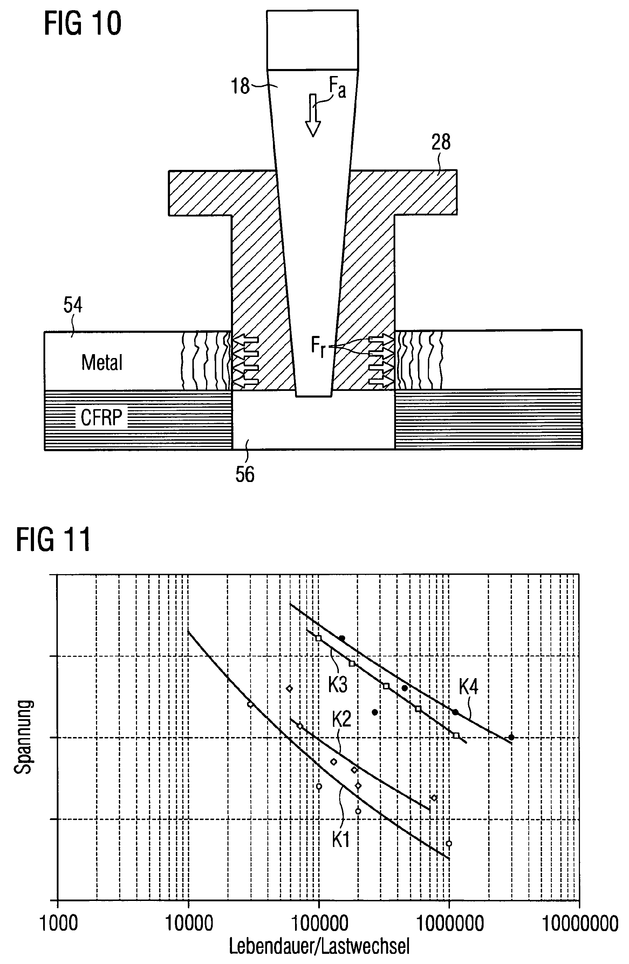

Wie in Fig. 10 ersichtlich ist, hat die Aufweitvorrichtung 12 den Vorteil einer einseitigen Zugänglichkeit zu der Öffnung 56, so dass das Umformwerkzeug 10 auch für Metall-Nicht-Metall-Verbindungen, wie beispielsweise Hybrid-Verbindungen mit Faserverbundwerkstoffen, eingesetzt werden kann, bei denen nur die metallische Komponente aufgedornt werden soll. Hierbei kann nur das metallische Werkstück aufgedornt werden, ohne dass das Nicht-Metall-Teil berührt bzw. beschädigt wird. Dadurch wird ein als One-Step-Assembly benannter Verfahrensschritt möglich, da die Teile nach dem Bohren für die Aufweitung der Öffnung 56 der metallischen Komponente nicht noch einmal getrennt werden müssen, sondern in der bereits fixierten Position verbleiben können. Somit wird eine Zeit- und Kostenersparnis erreicht.

In Fig. 11 ist die Lebensdauer eines Werkstücks für unterschiedlich eingebrachte Spannungen dargestellt. Die erste Kurve K1 und die zweite Kurve K2 zeigen die Lebensdauerkurve für ein Werkstück aus einer Aluminiumlegierung , wobei die Öffnungen nicht aufgeweitet worden sind.

Die dritte Kurve K3 zeigt die Lebensdauer des gleichen Werkstoffes, wobei die Öffnungen mittels eines konventionellen Aufweitverfahrens aufgeweitet worden sind. Vorliegend sind die Öffnungen um 3 % aufgeweitet worden. Wie ersichtlich ist, hat sich die Ermüdungsfestigkeit und damit einhergehend die Lebensdauer aufgrund der eingebrachten Druckeigenspannungen erhöht. Zum Beispiel beträgt die Lastwechselzahl bei einer in das Werkstück eingebrachten Spannung bei einem nicht aufgeweiteten Werkstück 100000 und bei einem Werkstück, dessen Öffnungen mittels eines konventionellen Verfahrens aufgeweitet worden sind, 1000000. Demgemäß hat sich die Werkstofffestigkeit deutlich erhöht.

Durch den Einsatz der Aufweitvorrichtung 12 gemäß dem Ausführungsbeispiel kann die Lebensdauer nochmals erhöht werden. Die Aufweitvorrichtung 12 gemäß dem Ausführungsbeispiel ermöglicht eine größere Aufweitung der Öffnung, so dass höhere Druckeigenspannungen in das Werkstück eingebracht werden können. Im vorliegenden Beispiel ist die Öffnung um 4 % aufgeweitet worden. Wie in der vierten Kurve K4 ersichtlich ist, erhöht sich die Lebensdauer des Werkstücks nochmals im Vergleich zu der Lebensdauer eines mittels eines konventionellen Aufweitverfahrens bearbeiteten Werkstücks. Somit ermöglicht das Umformwerkzeug 10 der vorliegenden Erfindung die Werkstofffestigkeit bei ansonsten gleichen Werkstoffeigenschaften und Abmaßen nochmals zu erhöhen.

### Bezugszeichenliste

- 10: Umformwerkzeug
- 12: Aufweitvorrichtung
- 14: Antriebselement
- 16: Innenloch
- 18: Dorn
- 20: erster Abschnitt
- 22: zweiter Abschnitt
- 24: erstes Ende
- 26: Funktionsflächen
- 28: Aufweitelemente
- 30: Hülse
- 32: erster Abschnitt
- 34: zweiter Abschnitt
- 36: Flansch
- 38: Auflagefläche
- 40: Aufnahmevorrichtung
- 42: Ausnehmung
- 44: Außenfläche
- 46: Formfläche
- 48: Endkante
- 50: Trennflächen
- 52: Funktionsfläche
- 54: Werkstück
- 56: Öffnung
- 58: Innenwandung
- 60: mittlerer Bereich
- R: Radialrichtung
- A: Axialrichtung
- M: Mittelachse
- α: Winkel
- Fₐ: Axialkraft
- Fᵣ: Radialkraft
- r_{F}: Radius der Funktionsfläche
- d₁: Durchmesser der Öffnung im unaufgeweiteten Zustand
- d₂: Durchmesser der Öffnung im aufgeweiteten Zustand
- K1: erste Kurve
- K2: zweite Kurve
- K3: dritte Kurve
- K4: vierte Kurve

## Patentansprüche

1. Umformwerkzeug (10) zum Aufweiten einer Öffnung (56) mit einer Aufweitvorrichtung (12), die mehrere Aufweitelemente (28) umfasst, wobei die Aufweitelemente (28) jeweils eine gekrümmte Formfläche (46) aufweisen, die zwischen zwei umfangsseitigen Endkanten (48) verläuft, wobei die Aufweitelemente (28) von einer ersten Position in eine zweite Position überführbar sind, wobei in der ersten Position, die einem zusammengezogenen Zustand entspricht, die Aufweitelemente (28) über Trennflächen (50) miteinander in Verbindung stehen und wobei in einer zweiten Position, die einem aufgeweiteten Zustand entspricht, die Aufweitelemente (28) derart von einem Zentrum der Aufweitvorrichtung (12) in Radialrichtung (R) verschoben sind, dass die Trennflächen (50) voneinander beabstandet sind, **dadurch gekennzeichnet, dass** in der ersten Position die umfangsseitigen Endkanten (48) weiter von dem Zentrum beabstandet sind als ein mittlerer Bereich (60) der Formflächen (46).

2. Umformwerkzeug (10) nach Anspruch 1, **dadurch gekennzeichnet, dass** in der zweiten Position die umfangsseitigen Endkanten (48) und die Formflächen (46) gleich weit von dem Zentrum beabstandet sind.

3. Umformwerkzeug (10) nach Anspruch 1 oder 2, **dadurch gekennzeichnet, dass** die Formfläche (46) der Aufweitelemente (28) im Querschnitt in Radialrichtung (R) gesehen kreisbogenförmig ist.

4. Umformwerkzeug (10) nach Anspruch 3, **dadurch gekennzeichnet, dass** in der ersten Position die Endkanten (48) auf einem umbeschriebenen Kreis liegen und ein mittlerer Bereich (60) der Formflächen (46) von dem Kreis beabstandet ist und dass in der zweiten Position sowohl die Endkanten (48) als auch die Formflächen (46) auf einem umbeschriebenen Kreis liegen.

5. Umformwerkzeug (10) nach einem der Ansprüche 3 oder 4, **dadurch gekennzeichnet, dass** ein Radius der Formflächen (46) größer ist als ein Abstand der Endkanten (48) von dem Zentrum der Aufweitvorrichtung (12) in der ersten Position, vorzugsweise zwischen 2,5% und 10% größer ist und insbesondere ca. 5% größer ist.

6. Umformwerkzeug (10) nach einem der vorhergehenden Ansprüche, **gekennzeichnet durch** ein Antriebselement (14), mittels dem die Aufweitvorrichtung (12) von der ersten Position in eine zweite Position überführbar ist.

7. Umformwerkzeug (10) nach Anspruch 6, **dadurch gekennzeichnet, dass** das Antriebselement (14) einen Dorn (18) aufweist, der in ein Innenloch (16) der Aufweitvorrichtung (12) einführbar ist.

8. Umformwerkzeug (10) nach Anspruch 7, **dadurch gekennzeichnet, dass** eine Innenfläche des Innenlochs (16) und/oder eine Außenfläche (44) des Dorns (18) mit einer Gleitschicht versehen sind.

9. Umformwerkzeug (10) nach Anspruch 8, **dadurch gekennzeichnet, dass** die Gleitschicht aus einer vorzugsweise elektrochemisch aufgetragenen Nickelschicht und/oder einer diamantähnlichen Kohlenstoffschicht, insbesondere von mehreren Mikrometer Dicke, gebildet ist.

10. Umformwerkzeug (10) nach einem der Ansprüche 7 bis 9, **dadurch gekennzeichnet, dass** ein Winkel (α) zwischen einer Mittelachse M des Dorns (18) und einer Außenfläche (44) zwischen 0,3 Grad und 3 Grad beträgt.

11. Verfahren zum Aufweiten einer Öffnung (56) von einem ersten Durchmesser d₁ zu einem zweiten Durchmesser d₂ mit folgenden Schritten:
a) Bereitstellen mehrerer Aufweitelemente (28), die jeweils eine zwischen zwei Endkanten (48) verlaufende Formfläche (46) und zwei Trennflächen (50) aufweist, wobei die Aufweitelemente (28) von einer ersten Position, die einem Durchmesser d₁ im unaufgeweiteten Zustand entspricht, in eine zweite Position, die einem Durchmesser d₂ im gewünschten aufgeweiteten Zustand entspricht, überführbar sind, indem die Aufweitelemente (28) in einer Radialrichtung (R) verschoben werden, **dadurch gekennzeichnet, dass** die Trennflächen (50) und die Formflächen (46) derart ausgestaltet sind, dass in der ersten Position, ein mittlerer Bereich (60) der Formflächen (46) bei Anlage an der unaufgeweiteten Öffnung (56) weiter von der Innenwandung (58) der Öffnung (56) beabstandet ist als die Endkanten (48) und dass in der zweiten Position die Formflächen (46) insgesamt der Kontur der Innenwandung (58) der erwünschten aufgeweiteten Öffnung (56) entsprechen;
b) Zusammenfügen der Aufweitelemente (28) zu einer Aufweitvorrichtung (12) und Überführen der Aufweitelemente (28) in ihre erste Position;
c) Einführen der Aufweitvorrichtung (12) in die Öffnung (56) und
d) kontinuierliches Aufweiten der Öffnung (56) durch Überführen der Aufweitelemente (28) in die zweite Position.

12. Verfahren nach Anspruch 11, **gekennzeichnet durch** das Aufweiten der Öffnung (56) von einer Seite aus, so dass bei zwei benachbarten Werkstücken (54) lediglich eine der beiden Öffnungen (56) aufgeweitet wird.

13. Verfahren nach einem der Ansprüche 11 oder 12, **gekennzeichnet durch** das Aufweiten einer Öffnung (56) mit einem Durchmesser d in Werkstücken (54) mit einer Platten- oder Stapeldicke t, wobei t>d, insbesondere t>2*d, ist.

## Claims

1. A forming tool (10) for widening an opening (56), the forming tool comprising an expanding device (12) comprising several expansion elements (28),
wherein the expansion elements (28) each have a curved forming surface (46) extending between two peripheral end edges (48), wherein the expansion elements (28) are moveable from a first position to a second position, wherein in the first position, which corresponds to a contracted state, the expansion elements (28) are connected with one another by way of separating surfaces (50),
wherein in the second position, which corresponds to an expanded state, the expansion elements (28) are displaced in a radial direction (R) from a center of the expanding device (12) such that the separating surfaces are spaced apart from one another,
**characterized in that** in the first position, the peripheral end edges (48) are spaced further apart from the center than a central region (60) of the forming surfaces (46).

2. The forming tool (10) according to claim 1,
charactzerized in that the peripheral end edges (48) and the forming surfaces (46) are equidistantly spaced apart from the center in the second position.

3. The forming tool (10) according to claim 1 or 2,
**characterized in that** the forming surface (46) of the expansion elements (28), seen in cross section in the radial direction (R), have a shape of a circular arc.

4. The forming tool according to claim 3,
**characterized in that** in the first position the peripheral end edges (48) are located on a circumscribed circle and the central region (60) of the forming surfaces (46) is at a distance from the circle, and **in that** in the second position, both the peripheral end edges (48) and the forming surfaces (46) are located on a circumscribed circle.

5. The forming tool (10) according to any of the claims 3 or 4,
**characterized in that** in the first position, a radius of the forming surfaces (46) is greater, preferably between 2.5% and 10% greater and especially 5% greater, than a distance of the end edges (48) from the center of the expanding device (12).

6. The forming tool (10) according to any of the preceding claims,
**characterized by** a drive element (14) configured to move the expanding device (12) from the first position to a second position.

7. The forming tool (10) according to claim 6,
**characterized in that** the drive element (14) includes a mandrel (18) configured for insertion into an inner hole (16) of the expanding device (12).

8. The forming tool (10) according to claim 7,
**characterized in that** an inner surface of the inner hole (16) and/or an outer surface (44) of the mandrel (18) has a nonstick coating.

9. The forming tool (10) according to claim 8,
**characterized in that** the nonstick coating is formed of a - preferably electrochemically applied - nickel layer and/or a diamond-like carbon layer, especially having a thickness of several micrometers.

10. The forming tool (10) according to any of the claims 7 to 9,
**characterized in that** an angle (α) between a central axis M of the mandrel (18) and an outer surface (44) is between 0.3 degrees and 3 degrees.

11. A method for widening an opening (56) from a first diameter d₁ to a second diameter d₂, the method comprising the steps:
a) providing several expansion elements (28), each having a forming surface (46) extending between two end edges (48) and two separating surfaces (50), wherein the expansion elements (28) are moveable from a first position, which in an unexpanded state corresponds to the first diameter d₁, to a second position, which corresponds to the second diameter d₂ in the desired expanded state, by displacing the expansion elements in a radial direction (R), **characterized in that** the separating surfaces (50) and the forming surfaces (46) are configured such that in the first position, a central region (60) of the forming surfaces (46), when placed against the non-widened opening (56), is further apart from the inner wall (58) of the opening (56) than the end edges (48), and that in the second position, the forming surfaces (46) altogether correspond to the contour of the inner wall (58) of the desired expanded opening (56);
b) assembling the expansion elements (28) to form an expanding device (12) and moving the expansion elements (28) to the first position;
c) inserting the expanding device (12) into the opening (56); and
d) continuously expanding the opening (56) by moving the expansion elements (28) into the second position.

12. The method according to claim 11,
**characterized by** widening the opening (56) from one side so that with two adjacent workpieces (54), only one of the two openings (56) is widened.

13. The method according to claim 11 or 12,
**characterized by** widening the opening (56) with a diameter d in workpieces (54) having a plate or stack thickness t, wherein t>d, especially t>2*d.

## Revendications

1. Outil de mise en forme (10) permettant d'élargir une ouverture (56) comprenant un dispositif élargisseur (12) qui comporte plusieurs éléments élargisseurs (28), chacun des éléments élargisseurs (28) comportant une surface de formage curviligne (46) qui s'étend entre deux bords d'extrémité périphériques (48), les éléments élargisseurs (28) pouvant être transférés d'une première position dans une seconde position, dans la première position, qui correspond à un état rétracté, les éléments élargisseurs (28) étant en liaison les uns avec les autres par des surfaces de séparation (50), et dans la seconde position qui correspond à un état élargi, les éléments élargisseurs (28) étant déplacés en direction radiale (R) par rapport au centre du dispositif élargisseur (12) de sorte que les surfaces de séparation (50) soient situées à distance les unes des autres,
**caractérisé en ce que**
dans la première position, les bords d'extrémités périphériques (48) sont plus éloignés du centre que la zone médiane (60) des surfaces de formage (46).

2. Outil de mise en forme (10) conforme à la revendication 1,
**caractérisé en ce que**
dans la seconde position, les bords d'extrémité périphériques (48) et les surfaces de formage (46) sont situés à la mêmes distance du centre.

3. Outil de mise en forme (10) conforme à la revendication 1 ou 2,
**caractérisé en ce que**
les surfaces de formage (46) des éléments élargisseurs (28) ont une section en forme d'arc de cercle dans la direction radiale (R).

4. Outil de mise en forme (10) conforme à la revendication 3,
**caractérisé en ce que**
dans la première position les bords d'extrémité (48) sont situés sur un cercle circonscrit et la zone médiane (60) des surfaces de formage (46) est située à distance de ce cercle, tandis que dans la seconde position les bords d'extrémité (48) et également les surfaces de formage (46) sont situés sur un cercle circonscrit.

5. Outil de mise en forme (10) conforme à l'une des revendications 3 et 4,
**caractérisé en ce que**
le rayon des surfaces de formage (46) est supérieur à la distance des bords d'extrémité (48) du centre du dispositif élargisseur (12) dans la première position, et est par exemple de 2,5 % à 10 % supérieur, et en particulier de 5 % supérieur.

6. Outil de mise en forme (10) conforme à l'une des revendications précédentes,
**caractérisé par**
un élément d'entraînement (14) au moyen duquel le dispositif élargisseur (12) peut être transféré de la première position dans la seconde position.

7. Outil de mise en forme (10) conforme à la revendication 6,
**caractérisé en ce que**
l'élément d'entraînement (14) comporte un mandrin (18) pouvant être introduit dans un perçage interne (16) du dispositif élargisseur (12).

8. Outil de mise en forme (10) conforme à la revendication 7,
**caractérisé en ce que**
la surface interne du perçage interne (16) et/ou la surface externe (44) du mandrin (16) est(sont) équipée(s) d'une couche de glissement.

9. Outil de mise en forme (10) conforme à la revendication 8,
**caractérisé en ce que**
la couche de glissement est constituée par une couche de nickel appliquée de préférence par voie électrochimique et/ou par une couche de carbone de type diamant, en particulier ayant une épaisseur de plusieurs micromètres.

10. Outil de mise en forme (10) conforme à la revendication 7 à 9,
**caractérisé en ce que**
l'angle (α) entre l'axe médian M du mandrin (18) et la surface externe (44) est compris entre 0,3 degrés et 3 degrés.

11. Procédé permettant d'élargir une ouverture (56) d'un premier diamètre d₁ à un second diamètre d₂ comprenant les étapes suivantes consistant à :
a) se procurer plusieurs éléments élargisseurs (28) comportant chacun une surface de formage (46) s'étendant entre deux bords d'extrémité (48) et deux surfaces de séparation (50), les éléments élargisseurs (28) pouvant être transférés d'une première position qui correspond au diamètre d₁ à l'état non élargi dans une seconde position qui correspond au diamètre d₂ à l'état élargi souhaité, en déplaçant les éléments élargisseurs (28) en direction radiale (R),
**caractérisé en ce que**
les surfaces de séparation (50) et les surfaces de formage (46) sont réalisées de sorte que, dans la première position, la zone médiane (60) des surfaces de formage (46) soit, lors de sa mise en place sur l'ouverture (56) non élargie, plus éloignée de la paroi interne (58) de l'ouverture (56) que les bords d'extrémité (48) et que, dans la seconde position les surfaces de formage (46) correspondent globalement au contour de la paroi interne (58) de l'ouverture (56) élargie souhaitée,
b) assembler les éléments élargisseurs (28) pour obtenir un dispositif élargisseur (12) et transférer les éléments élargisseurs (28) dans leur première position,
c) introduire le dispositif élargisseur (12) dans l'ouverture (56), et
d) élargir de manière continue l'ouverture (56) par transfert des éléments élargisseurs (28) dans la seconde position.

12. Procédé conforme à la revendication 11,
**caractérisé par**
l'élargissement de l'ouverture (56) à partir d'un côté de sorte que en présence de deux pièces (54) voisines, seule l'une des deux ouvertures (56) soit élargie.

13. Procédé conforme à l'une des revendications 11 et 12,
**caractérisé par**
l'élargissement d'une ouverture (56) ayant un diamètre d dans des pièces (54) ayant une épaisseur de plaques ou de pile t, avec t>d, en particulier t>2*d.
